# FASCICULE DE BREVET EUROPEEN

(11) **EP 3 753 788 B1**
(45) Date de publication et mention de la délivrance du brevet: **08.09.2021**
(21) Numéro de dépôt: 20175805.9
(22) Date de dépôt: 20.05.2020
(51) Int. Cl.: B60R 7/04

(54) **COQUE INTERNE D'UNE CONSOLE CENTRALE DE VÉHICULE AUTOMOBILE**
INNENSCHALE EINER MITTELKONSOLE EINES KRAFTFAHRZEUGS
INTERNAL SHELL OF A CENTRAL CONSOLE OF A MOTOR VEHICLE

(30) Priorité: 17.06.2019 FR 1906460
(43) Date de publication de la demande: 23.12.2020
(73) Titulaire: NOVARES France, 92140 Clamart (FR)
(72) Inventeur: CAGNAC, Adrien, 06100 NICE (FR)
(74) Mandataire: Delorme, Nicolas

(56) Documents cités:
- WO-A1-00/21793
- FR-A3- 2 665 405
- US-A1- 2014 300 124

## Description

La présente invention concerne une coque interne d'une console centrale de véhicule automobile, notamment conçue pour faciliter son montage en usine. L'invention concerne également une console centrale correspondante et un véhicule automobile équipé d'une telle console centrale.

L'habitacle d'un véhicule automobile comprend généralement une console centrale disposée entre deux sièges, en particulier entre le siège avant conducteur et le siège avant passager du véhicule, et qui sert notamment d'accoudoir central, d'espace de rangement et/ou de support pour diverses fonctions ou commandes.

Une console centrale est formée généralement d'une coque interne sur laquelle viennent se fixer des pièces d'habillage. Dans une configuration classique, la coque interne est formée par l'assemblage de deux demi-coques en matière plastique relativement similaires, l'assemblage étant réalisé d'abord par clippage des demi-coques puis par un verrouillage au moyen de vis. Cette configuration présente toutefois l'inconvénient de rendre l'opération d'assemblage de la coque interne relativement complexe et longue à réaliser. Par ailleurs, l'utilisation de vis accroît de manière importante le coût de fabrication des coques internes. Des études ont également montré que l'utilisation de vis peut créer des zones de fragilisation dans les coques internes, ce qui peut nuire à la tenue mécanique des coques internes aux efforts de compression notamment.

US 2014/300124 divulgue un coque interne d'une console centrale de véhicule automobile formée par l'assemblage de deux demi-coques, respectivement une première demi-coque et une deuxième demi-coque, en matière plastique.

L'invention vise donc à proposer une configuration de coque interne ne présentant pas les inconvénients précités, et en particulier, une coque interne pouvant être assemblée sans utiliser de vis.

A cet effet, l'invention concerne une coque interne d'une console centrale de véhicule automobile, ladite coque interne étant formée par l'assemblage de deux demi-coques, respectivement une première demi-coque et une deuxième demi-coque, en matière plastique, lesdites demi-coques étant articulées ensemble de telle sorte à pouvoir se déplacer l'une par rapport à l'autre d'une configuration partiellement assemblée de la coque interne, dans laquelle elles sont retenues uniquement au niveau de deux bords latéraux supérieurs, respectivement avant et arrière, de ladite coque interne, à une configuration complètement assemblée de la coque interne, dans laquelle elles sont fixées ensemble par clippage.

Ainsi configurée, la coque interne de l'invention pourra être facilement montée en usine et ne nécessitera pas d'utilisation de vis pour son montage. Le coût de fabrication d'une telle coque interne en sera donc réduit par rapport à la configuration classique susmentionnée, tout en garantissant une bonne tenue mécanique de la coque interne aux efforts en compression.

La coque interne de la présente invention pourra également comprendre une ou plusieurs des caractéristiques suivantes, prises isolément ou de manière combinée :
- Chacun des bords latéraux supérieurs est formé par l'assemblage d'un premier segment, faisant partie intégrante de la première demi-coque, et d'un deuxième segment, faisant partie intégrante de la deuxième demi-coque, les premier et deuxième segments se chevauchant partiellement au niveau d'une de leurs extrémités dans les configurations partiellement et complètement assemblées de la coque interne, lesdites extrémités étant configurées pour former une articulation de type charnière.
- Le deuxième segment comprend un doigt de montage formé en saillie à l'une des extrémités dudit deuxième segment, ledit doigt de montage étant configuré pour venir traverser une ouverture formée dans l'une des extrémités du premier segment lors de l'assemblage des deux demi-coques et pour venir en appui sur une paroi interne de ladite ouverture dans la configuration complètement assemblée de la coque interne.
- L'ouverture est prolongée par une jupe de forme sensiblement hémicylindrique, ladite jupe formant une rampe curviligne sur laquelle vient s'appuyer le doigt de montage lors de l'assemblage des deux demi-coques, assurant ainsi un guidage du doigt de montage.
- Le deuxième segment comprend une paroi d'extrémité jouxtant le doigt de montage et configurée pour venir, dans la configuration complètement assemblée de la coque interne, dans l'alignement de la paroi interne de l'ouverture sur laquelle prend appui le doigt de montage, ladite paroi d'extrémité étant munie d'une fenêtre apte à recevoir un ergot de blocage formé en saillie sur une paroi d'extrémité correspondante du premier segment dans la configuration complètement assemblée de la coque interne, assurant ainsi le blocage de la coque interne dans sa configuration complètement assemblée.
- La première demi-coque comprend au moins un rebord d'extrémité destiné à venir au contact avec au moins un rebord d'extrémité correspondant de la deuxième demi-coque dans la configuration complètement assemblée de la coque interne, la deuxième demi-coque comportant un ou plusieurs éléments de fixation en forme de harpon formés en saillie le long dudit rebord d'extrémité et configurés pour venir s'enfoncer à l'intérieur de trous de fixation formés le long du rebord d'extrémité correspondant de la première demi-coque, dans ladite configuration complètement assemblée, lesdits éléments de fixation coopérant avec des pattes de retenue bordant lesdits trous de fixation de manière à assurer un clippage des deux demi-coques au moyen desdits éléments de fixation.
- La première demi-coque comprend une paroi latérale intérieure orientée vers une paroi latérale intérieure correspondante de la deuxième demi-coque, dans la configuration complètement assemblée de la coque interne, lesdites parois latérales intérieures étant configurées pour définir un espace creux dans la coque interne.
- Chaque demi-coque comprend une paroi latérale extérieure orientée de manière opposée à la paroi latérale intérieure, ladite paroi latérale extérieure étant configurée pour définir un canal à section en U débouchant, d'un côté, sur une extrémité ouverte avant et, de l'autre côté, sur une extrémité ouverte arrière, ledit canal étant destiné à permettre une circulation d'air à l'intérieur de la console centrale depuis une zone située sous le tableau de bord du véhicule automobile vers une zone située au niveau des sièges arrières du véhicule automobile.
- La paroi latérale extérieure de chaque demi-coque est munie d'une série de nervures possédant un profil ondulé, lesdites nervures étant destinées à permettre la fixation sur la coque interne, par un procédé de soudure par vibration, d'une ou plusieurs pièces d'habillage.

L'invention porte également sur une console centrale de véhicule automobile comprenant une coque interne telle que définie précédemment et une ou plusieurs pièces d'habillage fixées sur la coque interne, ainsi que sur un véhicule automobile équipé d'une telle console centrale.

L'invention sera davantage comprise à la lecture de la description non limitative qui va suivre, faite en référence aux figures ci-annexées.
- La figure 1 est une vue en perspective d'une console centrale formée à partir d'une coque interne selon l'invention.
- La figure 2 est une vue en perspective de la coque interne utilisée pour former la console centrale de la figure 1.
- La figure 3 est une vue de face d'une paroi latérale intérieure d'une des demi-coques représentées sur la figure 2.
- La figure 4 est une vue agrandie en perspective d'un exemple d'élément de fixation permettant le clippage des demi-coques représentées sur la figure 2.
- La figure 5 est une vue agrandie du détail A représenté sur la figure 2.
- La figure 6 est une vue similaire à la figure 5, les demi-coques étant en cours d'assemblage.
- La figure 7 est une vue schématique du détail A représenté sur la figure 2, dans une première étape d'assemblage de la coque interne.
- La figure 8 est une vue similaire à la figure 7, dans une deuxième étape d'assemblage de la coque interne.
- La figure 9 est une vue similaire à la figure 7, dans une troisième étape d'assemblage de la coque interne.
- La figure 10 est un diagramme montrant l'évolution comparative de la force de réaction respectivement d'une console centrale équipée d'une coque interne selon l'invention et d'une console centrale équipée d'une coque interne selon une configuration classique lorsque les consoles centrales sont soumises à une force latérale.

Dans la présente invention, les termes avant et arrière font référence respectivement aux directions avant et arrière du véhicule. Les termes supérieur et inférieur font référence respectivement à des orientations dirigées vers le haut et vers le bas. Les termes intérieur et extérieur font référence respectivement à des orientations dirigées vers l'intérieur et vers l'extérieur du véhicule.

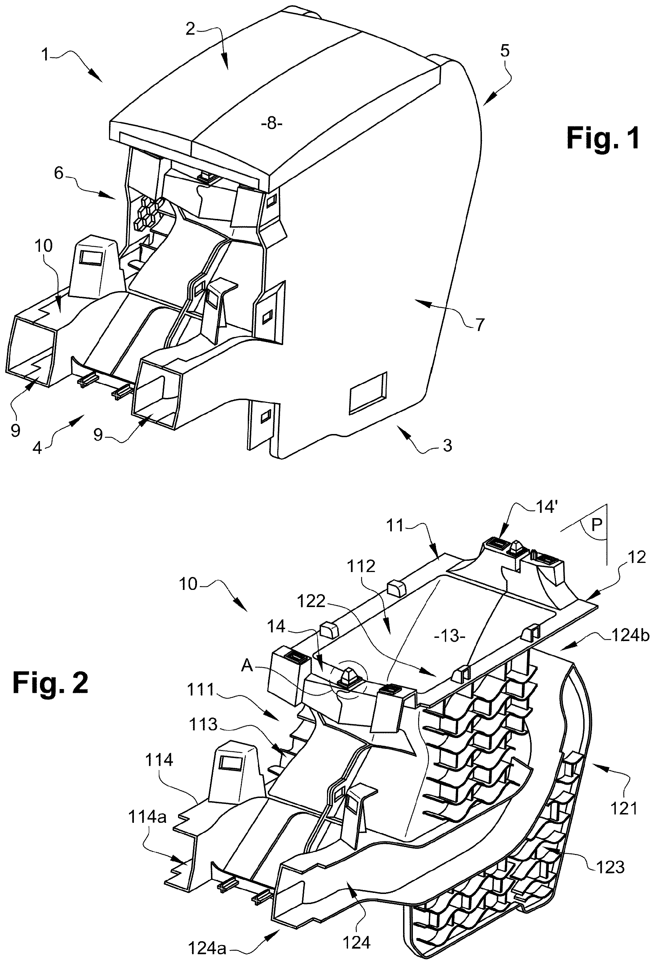

En référence à la figure 1, il est représenté une console centrale 1 d'un habitacle de véhicule automobile. Cette console centrale 1 présente une forme générale allongée, similaire à un parallélépipède ou s'inscrivant dans un parallélépipède. Elle présente notamment une face supérieure 2 sur laquelle est disposée une pièce d'habillage 8 formant accoudoir, une face inférieure 3 opposée à la face inférieure 2 et destinée à être fixée sur le plancher d'un habitacle de véhicule automobile, une face avant 4 destinée à être fixée sous la planche de bord du véhicule, et une face arrière 5 destinée à faire face aux sièges arrière du véhicule. De part-et-d'autre de la console 1 sont disposées des pièces d'habillage 6 et 7 qui entourent latéralement une coque interne 10 sur laquelle viennent se fixer lesdites pièces d'habillage 6, 7 et la pièce d'habillage 8. La coque interne 10 et les pièces d'habillage 6, 7 sont configurées pour former une paire de conduits de circulation d'air 9 débouchant à une extrémité sur la face avant 4 et à une autre extrémité sur la face arrière 5, lesdits conduits 9 permettant ainsi la circulation d'air depuis une source d'alimentation d'air disposée sous le tableau de bord vers un aérateur dirigé vers les passagers arrière.

En référence à la figure 2, il est représenté la coque interne 10 utilisée pour former la console 1. Cette coque interne 10 est formée par l'assemblage de deux demi-coques 11, 12, respectivement une première demi-coque 11 et une deuxième demi-coque 12, les demi-coques 11, 12 possédant une forme sensiblement symétrique par rapport à un plan médian P de la coque 10. Chaque demi-coque 11, 12 comprend une paroi latérale extérieure 111, 121 et une paroi latérale intérieure 112, 122 orientée de manière oppossée à la paroi latérale extérieure 111, 121. Les parois latérales intérieures 112, 122 possèdent un profil spécifique leur permettant de définir, une fois les demi-coques 11, 12 fixées ensemble, un espace creux 13 dans la coque interne 10, ledit espace creux 13 servant d'espace de rangement pour la console 1. Chacune des parois latérales extérieures 111, 121 est munie d'une série de nervures 113, 123 sensiblement parallèles entre elles et possédant un profil ondulé, lesdites nervures 113, 123 étant destinées à être fixés sur des nervures correspondantes des pièces d'habillage 6, 7 au moyen d'un procédé de soudure par vibration. L'utilisation d'un profil ondulé accroît de manière avantageuse la surface de contact desdites nervures et, de ce fait, permet de rigidifier la fixation par soudure des pièces d'habillage 6, 7 sur les demi-coques 11, 12. Par ailleurs, chacune des parois extérieures 111, 121 est traversée par un canal 114, 124 à section en U, chaque canal 114, 124 débouchant, d'un côté, sur une extrémité ouverte avant 114a, 124a et, de l'autre côté, sur une extrémité ouverte arrière 124b, et étant fermé sur sa face ouverte vers l'extérieur par un canal correspondant des pièces d'habillage 6, 7 de manière à former les conduits 9 de circulation d'air de la console 1.

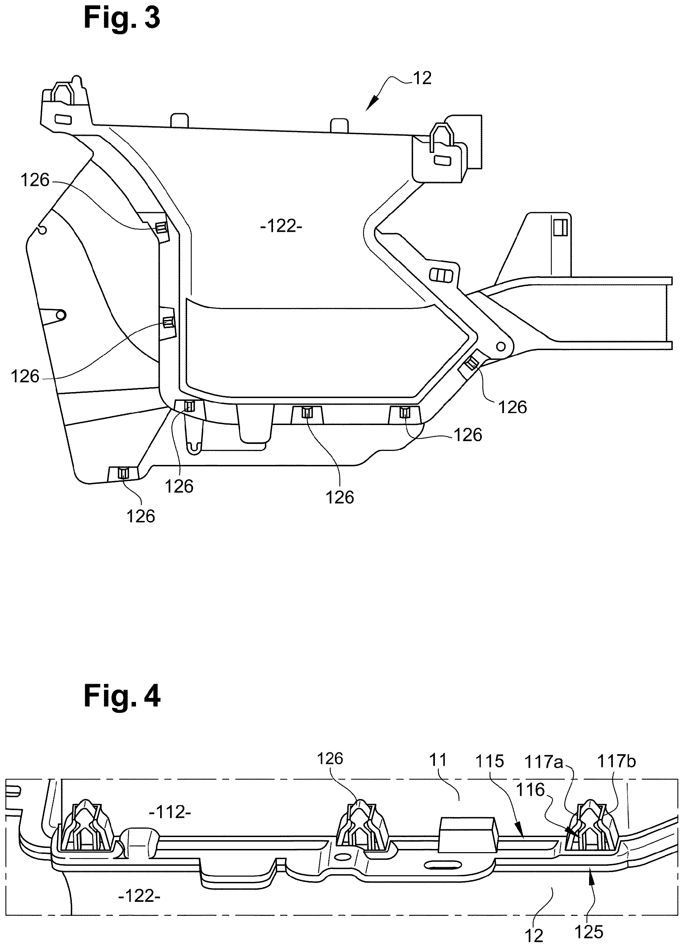

Comme représenté sur les figures 3 et 4, les parois latérales intérieures 112, 122 des demi-coques 11, 12 sont munies de rebords d'extrémité 115, 125 destinés à venir au contact l'un avec l'autre dans la configuration complètement assemblée de la coque interne 10, les rebords d'extrémité 115, 125 étant munis d'éléments de fixation complémentaires permettant d'assurer un clippage des deux demi-coques 11, 12. Ainsi, dans l'exemple représenté, la deuxième demi-coque 12 comporte plusieurs doigts de fixation 126 en forme de harpon formés en saillie le long du rebord d'extrémité 125 et configurés pour venir s'enfoncer à l'intérieur de trous 116 correspondants formés le long du rebord d'extrémité 115 de la première demi-coque 11, lesdits doigts de fixation 126 coopérant avec des pattes de retenue 117a, 117b bordant lesdits trous 116 de manière à assurer un clippage des deux demi-coques 11, 12. En particulier, chacun des doigts de fixation 126 possédera avantageusement une zone amincie sur sa longueur formant ainsi deux creux de part et d'autre du doigt de fixation 126 dans lesquels peuvent se loger une partie bombée des pattes de retenue 117a, 117b, empêchant ainsi un dessassemblage des demi-coques 11, 12.

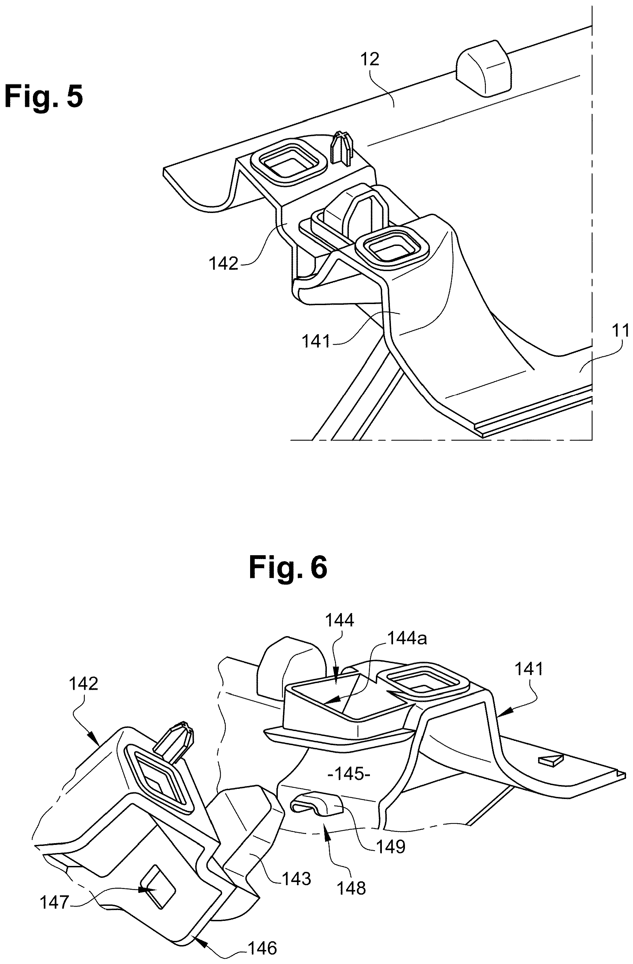

De manière à faciliter le montage de la coque interne 10, les demi-coques 11, 12 sont par ailleurs dotées de moyens de connexion complémentaires coopérant ensemble lors de l'assemblage de la coque interne 10 de manière à former une articulation de type charmière au niveau d'un bord latéral supérieur avant 14 et d'un bord latéral supérieur arrière 14'. Les moyens de connexion complémentaires mis en oeuvre au niveau du bord latéral supérieur avant 14 sont illustrés en détail sur les figures 5 et 6. Etant donné que les moyens de connexion mis en oeuvre au niveau du bord arrière 14' sont identiques à ceux du bord avant 14, il ne sera fait référence dans la suite de l'exposé qu'au seul bord avant 14. Ainsi, chacun des bords latéraux supérieurs 14, 14' est formé par l'assemblage d'un premier segment 141, faisant partie intégrante de la première demi-coque 11, et d'un deuxième segment 142, faisant partie intégrante de la deuxième demi-coque 12. Le deuxième segment 142 comprend un doigt de montage 143 formant une saillie à l'extrémité du deuxième segment 142 jouxtant le premier segment 141. Ce doigt de montage 143 est configuré pour venir traverser une ouverture 144 formée à l'extrémité du premier segment 141 jouxtant le deuxième segment 142 lors de l'assemblage des deux demi-coques 11, 12 et pour, ensuite, prendre appui sur une paroi interne 144a bordant ladite ouverture 144 dans la configuration complètement assemblée de la coque interne 10.

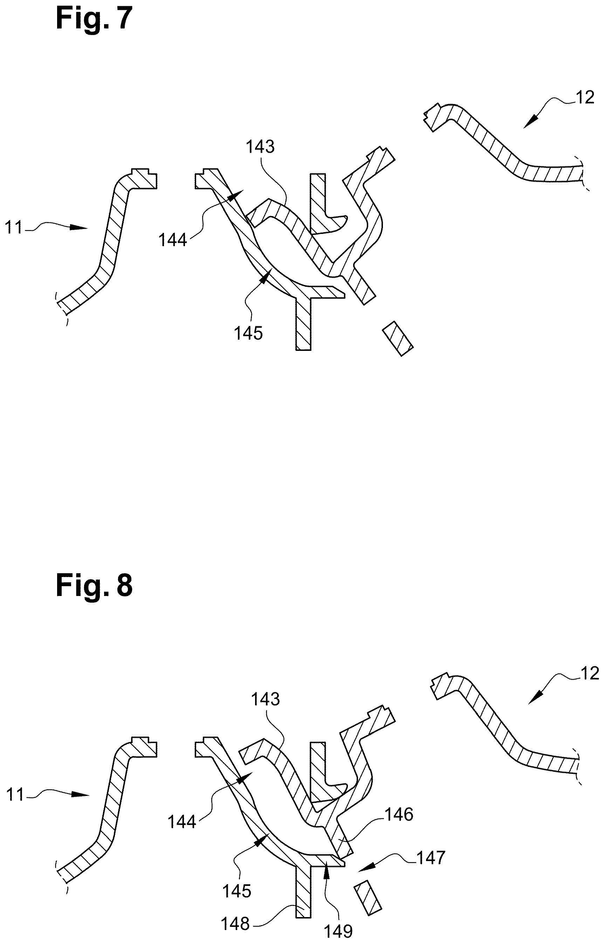

Les étapes successives permettant de passer d'une configuration non assemblée de la coque interne 10 à la configuration complètement assemblée de ladite coque 10 sont représentées sur les figures 7 à 9.

En référence à la figure 7, il est représenté une première étape d'assemblage de la coque interne 10 dans laquelle les demi-coques 11, 12 ont été rapprochées l'une de l'autre de telle sorte qu'un emboîtement partiel s'est opéré au niveau des bords latéraux supérieurs 14, 14'. En particulier, la deuxième demi-coque 12 a été inclinée de manière à permettre l'introduction de chacun des doigts de montage 143 dans la partie basse des ouvertures 144 de la première demi-coque 11, les doigts de montage ayant été avantageusement guidés lors de cette manœuvre par les jupes 145 qui, du fait de leur profil curviligne, ont produit un déplacement sensiblement pivotant de la deuxième demi-coque 12.

En référence à la figure 8, il est représenté une deuxième étape d'assemblage de la coque interne 10 dans laquelle les doigts de montage 143 ont été déplacés vers le haut par rapport à la position représentée sur la figure 7 de telle sorte qu'ils affleurent désormais dans la partie haute des ouvertures 144 de la première demi-coque 11. Dans cette position, des parois d'extrémité 146 formées dans le prolongement de chacun des doigts de montage 143 et munies chacune d'une fenêtre 147 reposent, au niveau d'un bord supérieur de ladite fenêtre 147, sur un ergot 149 formant une saillie au niveau d'une paroi d'extrémité 148 jouxtant la jupe 145. Cette position relative des demi-coques 11, 12 correspond à une configuration partiellement assemblée de la coque interne 10. Dans cette configuration, les demi-coques 11, 12 sont retenues uniquement au niveau des bords latéraux supérieurs 14, 14' de la coque interne 10.

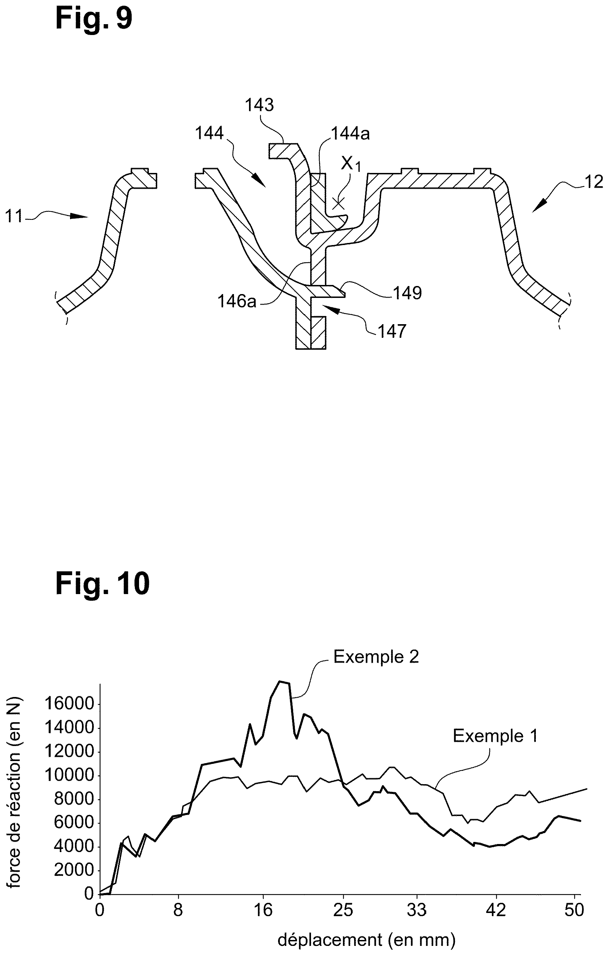

En référence à la figure 9, il est représenté une troisième étape d'assemblage de la coque interne 10 dans laquelle la deuxième demi-coque 12 a été inclinée par rapport à sa position de la figure 8 de manière à faire pivoter les doigts de montage 143 autour d'un axe de pivotement virtuel X1, tel que représenté sur la figure 9, ce qui a amené les doigts de montage 143 à venir en appui contre une paroi interne 144a des ouvertures 144. Lors de cette manœuvre, l'ergot 149 est venu traverser la fenêtre 147 et la partie 146a de la paroi d'extrémité 146 située entre le bord supérieur de la fenêtre 147 et l'extrémité inférieure du doigt de montage 143 est venue se caler dans l'espace libre séparant l'ergot 149 de la partie basse de l'ouverture 144 de telle sorte qu'elle est sensiblement alignée avec la paroi interne 144a de l'ouverture 144. Les demi-coques 11, 12 sont ainsi verrouillées en position au niveau des bords latéraux supérieurs 14, 14' de la coque interne 10. Par ailleurs, lors de cette manoeuvre, les rebords d'extrémité 115, 125 des demi-coques 11, 12 sont venus se rapprocher l'un de l'autre jusqu'à entrer en contact l'un avec l'autre dans la position relative représentée sur la figure 9, ce qui a permis aux doigts de fixation 126 de la deuxième demi-coque 12 de se clipper à l'intérieur des pattes de retenue 117a, 117b correspondantes de la première demi-coque 11. Cette position relative correspond à la configuration complètement assemblée de la coque interne 10.

En référence à la figure 10, il est représenté l'évolution comparative de la force de réaction (indiquée en ordonnée et exprimée en N) d'une console centrale 1 équipée d'une coque interne 10 selon l'invention (exemple 1) et d'une console centrale équipée d'une coque interne (exemple 2) se distinguant de la coque interne de l'invention par le fait d'utiliser une liaison par vis au niveau des bords latéraux supérieurs 14 et 14'. Ces deux consoles centrales sont soumises à un impacteur latéral qui, en exerçant une force sur le côté latéral de chaque console, va créer un déplacement (indiqué en abscisse et exprimé en mm) de leurs demi-coques constitutives. Le diagramme montre donc que, pour des déplacements supérieurs à 10 mm environ, la force de réaction de la console centrale de l'exemple 1 ne dépasse jamais les 1000 daN et reste dans un corridor de forces admises par certains constructeurs automobiles alors que pour la console centrale de l'exemple 2, la force de réaction peut atteindre 1600 daN et sortir du corridor de forces admises par ces constructeurs automobiles. Au-delà de valeurs de déplacements supérieurs à 18 mm environ, on constate une chute brutale de la force de réaction pour la console centrale de l'exemple 2. Cette chute brutale correspond en fait à la rupture des vis utilisées pour assembler la coque interne. Au contraire, dans la coque interne 10 de l'invention, les doigts de montage utilisés en lieu et place des vis permettent une élasticité en flexion latérale qui évite la montée en flèche de la force de réaction et cette rupture de ces moyens de maintien rigide. Cette flexion latérale est rendue possible du fait du matériau constitutif en plastique des doigts de montage 143 leur conférant une certaine souplesse.

## Revendications

1. Coque interne (10) d'une console centrale (1) de véhicule automobile, **caractérisée en ce qu'**elle est formée par l'assemblage de deux demi-coques (11, 12), respectivement une première demi-coque (11) et une deuxième demi-coque (12), en matière plastique, lesdites demi-coques (11, 12) étant articulées ensemble de telle sorte à pouvoir se déplacer l'une par rapport l'autre d'une configuration partiellement assemblée de la coque interne (10), dans laquelle elles sont retenues uniquement au niveau de deux bords latéraux supérieurs (14, 14'), respectivement avant et arrière, de ladite coque interne (10), à une configuration complètement assemblée de la coque interne (10), dans laquelle elles sont fixées ensemble par clippage.

2. Coque interne (10) selon la revendication 1, **caractérisée en ce que** chacun des bords latéraux supérieurs (14, 14') est formé par l'assemblage d'un premier segment (141), faisant partie intégrante de la première demi-coque (11), et d'un deuxième segment (142), faisant partie intégrante de la deuxième demi-coque (12), les premier et deuxième segments (141, 142) se chevauchant partiellement au niveau d'une de leurs extrémités dans les configurations partiellement et complètement assemblées de la coque interne (10), lesdites extrémités étant configurées pour former une articulation de type charnière.

3. Coque interne (10) selon la revendication 2, **caractérisée en ce que** le deuxième segment (142) comprend un doigt de montage (143) formé en saillie à l'une des extrémités dudit deuxième segment (142), ledit doigt de montage (143) étant configuré pour venir traverser une ouverture (144) formée dans l'une des extrémités du premier segment (141) lors de l'assemblage des deux demi-coques (11, 12) et pour venir en appui sur une paroi interne (144a) de ladite ouverture (144) dans la configuration complètement assemblée de la coque interne (10).

4. Coque interne (10) selon la revendication 3, **caractérisée en ce que** l'ouverture (144) est prolongée par une jupe (145) de forme sensiblement hémicylindrique, ladite jupe (145) formant une rampe curviligne sur laquelle vient s'appuyer le doigt de montage (143) lors de l'assemblage des deux demi-coques (11, 12), assurant ainsi un guidage du doigt de montage (143).

5. Coque interne (10) selon la revendication 3 ou 4, **caractérisée en ce que** le deuxième segment (142) comprend une paroi d'extrémité (146) jouxtant le doigt de montage (143) et configurée pour venir, dans la configuration complètement assemblée de la coque interne (10), dans l'alignement de la paroi interne (144a) de l'ouverture (144) sur laquelle prend appui le doigt de montage (143), ladite paroi d'extrémité (146) étant munie d'une fenêtre (147) apte à recevoir un ergot de blocage (149) formé en saillie sur une paroi d'extrémité (148) correspondante du premier segment (141) dans la configuration complètement assemblée de la coque interne (10), assurant ainsi le blocage de la coque interne (10) dans cette configuration complètement assemblée.

6. Coque interne (10) selon l'une des revendications précédentes, **caractérisée en ce que** la première demi-coque (11) comprend au moins un rebord d'extrémité (115) destiné à venir au contact avec au moins un rebord d'extrémité (125) correspondant de la deuxième demi-coque (12) dans la configuration complètement assemblée de la coque interne (10), la deuxième demi-coque (12) comportant un ou plusieurs éléments de fixation (126) en forme de harpon formés en saillie le long dudit rebord d'extrémité (125) et configurés pour venir s'enfoncer à l'intérieur de trous de fixation (116) formés le long du rebord d'extrémité (115) correspondant de la première demi-coque (11), dans ladite configuration complètement assemblée, lesdits éléments de fixation (126) coopérant avec des pattes de retenue(117a, 117b) bordant lesdits trous de fixation (116) de manière à assurer un clippage des deux demi-coques (11, 12) au moyen desdits éléments de fixation (126).

7. Coque interne (10) selon l'une des revendications précédentes, **caractérisée en ce que** la première demi-coque (11) comprend une paroi latérale intérieure (112) orientée vers une paroi latérale intérieure (122) correspondante de la deuxième demi-coque (12), dans la configuration complètement assemblée de la coque interne (10), lesdites parois latérales intérieures (112, 122) étant configurées pour définir un espace creux (13) dans la coque interne (10).

8. Coque interne (10) selon la revendication 7, **caractérisée en ce que** chaque demi-coque (11, 12) comprend une paroi latérale extérieure (111, 121) orientée de manière opposée à la paroi latérale intérieure (112, 122), ladite paroi latérale extérieure (111, 121) étant configurée pour définir un canal (114, 124) à section en U débouchant, d'un côté, sur une extrémité ouverte avant (114a, 124a) et, de l'autre côté, sur une extrémité ouverte arrière (124b), ledit canal (114, 124) étant destiné à permettre une circulation d'air à l'intérieur de la console centrale (1) depuis une zone située sous le tableau de bord du véhicule automobile vers une zone située au niveau des sièges arrières du véhicule automobile.

9. Coque interne (10) selon la revendication 8, **caractérisée en ce que** la paroi latérale extérieure (111, 121) de chaque demi-coque (11, 12) est munie d'une série de nervures (113, 123) possédant un profil ondulé, lesdites nervures (113, 123) étant destinées à permettre la fixation sur la coque interne (10), par un procédé de soudure par vibration, d'une ou plusieurs pièces d'habillage (6, 7).

10. Console centrale (1) de véhicule automobile comprenant une coque interne (10) selon l'une des revendications précédentes et une ou plusieurs pièces d'habillage (6, 7, 8) fixées sur la coque interne (10).

11. Véhicule automobile équipé d'une console centrale (1) selon la revendication précédente.

## Patentansprüche

1. Innenschale (10) für eine Kraftfahrzeug-Mittelkonsole (1), **dadurch gekennzeichnet, dass** sie durch das Zusammenfügen zweier Halbschalen (11, 12), einer ersten Halbschale (11) bzw. einer zweiten Halbschale (12), aus Kunststoff gebildet wird, wobei die Halbschalen (11, 12) so aneinander angelenkt sind, dass sie sich relativ zueinander von einer teilweise zusammengefügten Konfiguration der Innenschale (10), in der sie nur an zwei oberen Seitenkanten (14, 14'), vorne bzw. hinten, der Innenschale (10) gehalten werden, zu einer vollständig zusammengefügten Konfiguration der Innenschale (10) bewegt werden können, in der sie durch Verrasten aneinander befestigt sind.

2. Innenschale (10) nach Anspruch 1, **dadurch gekennzeichnet, dass** jede der oberen Seitenkanten (14, 14') durch das Zusammenfügen eines ersten Segments (141), das fester Bestandteil der ersten Halbschale (11) ist, und eines zweiten Segments (142), das fester Bestandteil der zweiten Halbschale (12) ist, gebildet wird, wobei sich das erste und das zweite Segment (141, 142) in der teilweise und der vollständig zusammengefügten Konfiguration der Innenschale (10) an einem ihrer Enden teilweise überlappen, wobei die Enden so ausgelegt sind, dass sie ein Gelenk vom Typ eines Scharniers bilden.

3. Innenschale (10) nach Anspruch 2, **dadurch gekennzeichnet, dass** das zweite Segment (142) einen Montagestift (143) umfasst, der an einem der Enden des zweiten Segments (142) als Vorsprung gebildet ist, wobei der Montagestift (143) so ausgelegt ist, dass er beim Zusammenfügen der zwei Halbschalen (11, 12) durch eine Öffnung (144), die in einem der Enden des ersten Segments (141) gebildet ist, hindurchgeht, und dass er in der vollständig zusammengefügten Konfiguration der Innenschale (10) an einer Innenwand (144a) der Öffnung (144) anliegt.

4. Innenschale (10) nach Anspruch 3, **dadurch gekennzeichnet, dass** die Öffnung (144) von einer Schürze (145) von im Wesentlichen halbzylindrischer Form verlängert wird, wobei die Schürze (145) eine bogenförmige Rampe bildet, an der sich der Montagestift (143) beim Zusammenfügen der zwei Halbschalen (11, 12) anlegt, wodurch eine Führung des Montagestifts (143) gewährleistet wird.

5. Innenschale (10) nach Anspruch 3 oder 4, **dadurch gekennzeichnet, dass** das zweite Segment (142) eine Endwand (146) umfasst, die an den Montagestift (143) angrenzt und so ausgelegt ist, dass sie in der vollständig zusammengefügten Konfiguration der Innenschale (10) mit der Innenwand (144a) der Öffnung (144), an der der Montagestift (143) anliegt, in einer Linie liegt, wobei die Endwand (146) mit einem Fenster (147) versehen ist, das in der vollständig zusammengefügten Konfiguration der Innenschale (10) einen Arretierzapfen (149), der an einer entsprechenden Endwand (148) des ersten Segments (141) als Vorsprung gebildet ist, aufnehmen kann, wodurch die Arretierung der Innenschale (10) in dieser vollständig zusammengefügten Konfiguration gewährleistet wird.

6. Innenschale (10) nach einem der vorstehenden Ansprüche, **dadurch gekennzeichnet, dass** die erste Halbschale (11) mindestens eine Endleiste (115) umfasst, die dazu bestimmt ist, in der vollständig zusammengefügten Konfiguration der Innenschale (10) mindesten eine entsprechende Endleiste (125) der zweiten Halbschale (12) zu berühren, wobei die zweite Halbschale (12) ein oder mehrere Befestigungselemente (126) in Form eines Widerhakens umfasst, die entlang der Endleiste (125) als Vorsprung gebildet und so ausgelegt sind, dass sie sich in der vollständig zusammengefügten Konfiguration in Befestigungslöcher (116), die entlang der entsprechenden Endleiste (115) der ersten Halbschale (11) gebildet sind, eindrücken, wobei die Befestigungselemente (126) mit Halteklauen (117a, 117b), die die Befestigungslöcher (116) säumen, zusammenwirken, um ein Verrasten der zwei Halbschalen (11, 12) mittels der Befestigungselemente (126) zu gewährleisten.

7. Innenschale (10) nach einem der vorstehenden Ansprüche, **dadurch gekennzeichnet, dass** die erste Halbschale (11) eine innere Seitenwand (112) umfasst, die in der vollständig zusammengefügten Konfiguration der Innenschale (10) einer entsprechenden inneren Seitenwand (122) der zweiten Halbschale (12) zugewandt ist, wobei die inneren Seitenwände (112, 122) so ausgelegt sind, dass sie einen Hohlraum (13) in der Innenschale (10) definieren.

8. Innenschale (10) nach Anspruch 7, **dadurch gekennzeichnet, dass** jede Halbschale (11, 12) eine äußere Seitenwand (111, 121) umfasst, die der inneren Seitenwand (112, 122) abgewandt ist, wobei die äußere Seitenwand (111, 121) so ausgelegt ist, dass sie einen Kanal (114, 124) mit U-förmigem Querschnitt bildet, der auf einer Seite an einem vorderen offenen Ende (114a, 124a) und auf der anderen Seite an einem hinteren offenen Ende (124b) mündet, wobei der Kanal (114, 124) dazu bestimmt ist, eine Luftzirkulation im Inneren der Mittelkonsole (1) von einem unter dem Armaturenbrett des Kraftfahrzeugs liegenden Bereich zu einem bei den Rücksitzen des Kraftfahrzeugs liegenden Bereich zu ermöglichen.

9. Innenschale (10) nach Anspruch 8, **dadurch gekennzeichnet, dass** die äußere Seitenwand (111, 121) jeder Halbschale (11, 12) mit einer Reihe von Rippen (113, 123) versehen ist, die ein Wellenprofil besitzen, wobei die Rippen (113, 123) dazu bestimmt sind, die Befestigung eines oder mehrerer Verkleidungsteile (6, 7) an der Innenschale (10) über ein Vibrationsschweißverfahren zu ermöglichen.

10. Kraftfahrzeug-Mittelkonsole (1), die eine Innenschale (10) nach einem der vorstehenden Ansprüche und ein oder mehrere Verkleidungsteile (6, 7, 8) umfasst, die an der Innenschale (10) befestigt sind.

11. Kraftfahrzeug, das mit einer Mittelkonsole (1) nach dem vorstehenden Anspruch ausgestattet ist.

## Claims

1. An inner shell (10) of a central console (1) of a motor vehicle, **characterized in that** it is formed by the assembly of two half-shells (11, 12), respectively a first half-shell (11) and a second half-shell (12), made of a plastic material, said half-shells (11, 12) being hinged together so as to be able to move relative to one another from a partially assembled configuration of the inner shell (10), in which they are retained only at respectively two front and rear upper side edges (14, 14') of said inner shell (10), to a fully assembled configuration of the inner shell (10), in which they are fastened together by clipping.

2. The inner shell (10) according to claim 1, **characterized in that** each of the upper side edges (14, 14') is formed by the assembly of a first segment (141), forming an integral part of the first half-shell (11), and a second segment (142), forming an integral part of the second half-shell (12), the first and second segments (141, 142) partially overlapping at one of their ends in the partially and fully assembled configurations of the inner shell (10), said ends being configured to form a hinge-type joint.

3. The inner shell (10) according to claim 2, **characterized in that** the second segment (142) comprises a mounting finger (143) protrudingly formed at one end of said second segment (142), said mounting finger (143) being configured to come through an opening (144) formed in any of the ends of the first segment (141) during the assembly of the two half-shells (11,12) and to bear on an inner wall (144a) of said opening (144) in the fully assembled configuration of the inner shell (10).

4. The inner shell (10) according to claim 3, **characterized in that** the opening (144) is extended by a skirt (145) with a substantially semicylindrical shape, said skirt (145) forming a curvilinear ramp on which the mounting finger (143) bears during the assembly of the two half-shells (11, 12), thus ensuring a guidance of the mounting finger (143).

5. The inner shell (10) according to claim 3 or 4, **characterized in that** the second segment (142) comprises an end wall (146) adjoining the mounting finger (143) and configured to lie, in the fully assembled configuration of the inner shell (10), in alignment with the inner wall (144a) of the opening (144) against which the mounting finger (143) bears, said end wall (146) being provided with a window (147) adapted to receive a blocking lug (149) protrudingly formed on a corresponding end wall (148) of the first segment (141) in the fully assembled configuration of the inner shell (10), thus ensuring the blocking of the inner shell (10) in this fully assembled configuration.

6. The inner shell (10) according to any of the preceding claims, **characterized in that** the first half-shell (11) comprises at least one end flange (115) intended to come into contact with at least one corresponding end flange (125) of the second half-shell (12) in the fully assembled configuration of the inner shell (10), the second half-shell (12) including one or several harpoon-shaped fastener(s) (126) protrudingly formed along said end flange (125) and configured to fit within fastening holes (116) formed along the corresponding end flange (115) of the first half-shell (11), in said fully assembled configuration, said fastening elements (126) cooperating with retaining tabs (117a, 117b) bordering said fastening holes (116) so as to ensure clipping of the two half-shells (11, 12) by means of said fastening elements (126).

7. The inner shell (10) according to any of the preceding claims, **characterized in that** the first half-shell (11) comprises an internal side wall (112) oriented towards a corresponding internal side wall (122) of the second half-shell (12), in the fully assembled configuration of the inner shell (10), said internal side walls (112, 122) being configured to define a hollow space (13) in the inner shell (10).

8. The inner shell (10) according to claim 7, **characterized in that** each half-shell (11, 12) comprises an external side wall (111, 121) oriented opposite to the internal side wall (112, 122), said external side wall (111, 121) being configured to define a U-section channel (114, 124) opening, on one side, onto a front open end (114a, 124a) and, on the other side, onto a rear open end (124b), said channel (114, 124) being intended to enable air circulation inside the central console (1) from an area located under the dashboard of the motor vehicle to an area located at the rear seats of the motor vehicle.

9. The inner shell (10) according to claim 8, **characterized in that** the external side wall (111, 121) of each half-shell (11, 12) is provided with a series of ribs (113, 123) having a corrugated profile, said ribs (113, 123) being intended to enable fastening on the inner shell (10), by a vibration welding process, of one or several trim part(s) (6, 7).

10. A central console (1) of a motor vehicle comprising an inner shell (10) according to any of the preceding claims and one or several trim part(s) (6, 7, 8) fastened on the inner shell (10).

11. A motor vehicle equipped with a central console (1) according to the preceding claim.
